# EUROPÄISCHE PATENTSCHRIFT

(11) **EP 3 690 837 B1**
(45) Veröffentlichungstag und Bekanntmachung des Hinweises auf die Patenterteilung: **12.06.2024**
(21) Anmeldenummer: 20152096.2
(22) Anmeldetag: 16.01.2020
(51) Int. Cl.: G08B 13/12

(54) **FLEXIBLES FLÄCHENELEMENT MIT SENSORSTRUKTUR AUS ELEKTRISCHEN LEITERN**
FLEXIBLE AREA ELEMENT WITH INTEGRATED SENSING WIRES
ÉLÉMENT PLAN FLEXIBLE COMPREND DES CAPTEURS EN FORME DE FILS CONDUCTEURS

(30) Priorität: 29.01.2019 DE 202019100517 U; 06.02.2019 DE 202019100689 U
(43) Veröffentlichungstag der Anmeldung: 05.08.2020
(73) Patentinhaber: Relytex GmbH & Co. KG, 84030 Landshut (DE)
(72) Erfinder: Katschke, Harald, 87766 Memmingerberg (DE)
(74) Vertreter: Ruckh, Rainer Gerhard

(56) Entgegenhaltungen:
- WO-A1-2009/018591
- DE-A1-102015 120 783
- US-A- 5 686 909

## Beschreibung

Die Erfindung betrifft ein flexibles Flächenelement gemäß dem Oberbegriff des Anspruchs 1.

Ein derartiges flexibles Flächenelement weist allgemein eine Sensorstruktur mit einer Auswerteeinheit auf, die dazu ausgebildet sind, Einschnitte in das flexible Flächenelement zu detektieren. Damit können diese Flächenelemente dazu verwendet werden, einen Schutz gegen Einbruch, Diebstahl, Vandalismus zu gewährleisten. Generell wird dadurch ein Schutz des flexiblen Flächenelements gegen unbefugte Eingriffe gewährleistet. Dementsprechend können mit dem flexiblen Flächenelement umhüllte Objekte gegen unbefugte Eingriffe geschützt werden.

Ein derartiges flexibles Flächenelement ist aus der WO 2018/113993 bekannt. Das dort beschriebene flexible Flächenelement umfasst Sensorstrukturen und Schnittfeststrukturen, die mittels einer Kettenwirkmaschine oder Raschelmaschine als Sensorfäden beziehungsweise schnittfeste Fäden als Schnittfeststruktur in das flexible Flächenelement eingearbeitet werden.

Mit der Schnittfeststruktur wird generell ein mechanischer Schutz gegen ein Durchstoßen des Flächenelements mit Gegenständen wie Messern oder ähnlich scharfkantigen Objekten erzielt. Die Schnittfeststrukturen sind dabei so ausgebildet, dass allenfalls nur ein lokales Einstechen in das Flächenelement möglich ist, nicht jedoch ein großflächiges Auftrennen des Flächenelements. Weiterhin wird ein Durchstoßen des Flächenelements mit der Sensorstruktur erfasst, so dass dann beispielsweise ein Alarmsignal generiert wird, das den unbefugten Eingriff auf das Flächenelement meldet.

Die DE 10 2015 120 783 A1 betrifft ein Verpackungssystem zum Verpacken wenigstens eines Verpackungsgutes, welche wenigstens einflächig oder schalenförmig ausgebildetes Bodenelement und wenigstens eine mit dem Bodenelement verbindbare oder verbundene, im entfalteten Zustand haubenförmige Plane aus flexiblem Material mit wenigstens einer über das Bodenelement stülpbaren oder gestülpten Planenöffnung aufweist, wobei das Verpackungsgut in einem Verschlusszustand des Verpackungssystems von dem Bodenelement und der Plane umschlossen ist. Die Plane ist wenigstens teilweise aus einem textilen Material ausgebildet, in oder auf das wenigstens eine elektrische Leiterstruktur textiltechnologisch ein- oder aufgebracht ist. Die Leiterstruktur ist mit wenigstens einer Alarmvorrichtung gekoppelt, so dass bei einer zumindest teilweisen Zerstörung des textilen Materials im Verschlusszustand infolge eines Kurzschlusses zwischen wenigstens zwei Leitern der Leiterstruktur und/oder einer Zerstörung wenigstens eines Leiters der Leiterstruktur ein Alarmsignal durch die Alarmvorrichtung ausgelöst wird.

Die US 5,686,909 A betrifft ein Alarmsystem für eine Bootabdeckung. Die Abdeckung weist ein Netzwerk von Drähten auf, die eine Sensorstruktur bilden. Eine Auswerteeinheit für die Sensorstruktur ist als separate Einheit außerhalb der Abdeckung vorgesehen.

Die WO 2009/018591 A1 betrifft eine Schutzvorrichtung für Koffer und dergleichen. In dem Koffer wird ein flexibles Flächengebilde mit einer leitfähigen Gitterstruktur integriert. An die Gitterstruktur können als externe Einheiten eine Rechnereinheit, eine Batterie und Signalgeber angeschlossen werden.

Der Erfindung liegt die Aufgabe zugrunde, ein flexibles Flächenelement der eingangs genannten Art bereitzustellen, welches flexibel einsetzbar ist und eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein flexibles Flächenelement mit einer Sensorstruktur und einer zugeordneten Auswerteeinheit, welche ausgebildet sind, Einschnitte in dem flexiblen Flächenelement zu detektieren. Auf dem flexiblen Flächenelement sind die Auswerteeinheit sowie eine autarke Energieversorgung und ein Funksender mittels Klebe- oder Schweißverbindungen fixiert, wobei die autarke Energieversorgung und der Funksender an die Auswerteeinheit angeschlossen sind. In der Auswerteeinheit generierte Signale sind mittels des Funksenders an einen Funkempfänger einer externen Einheit übertragbar.

Mit der Sensorstruktur wird ein wirksamer Manipulationsschutz derart erhalten, dass ein Durchstoßen des flexiblen Flächenelements sicher detektiert werden kann. Dabei kann ein Durchstoßen an einer beliebigen Stelle des flexiblen Flächenelements erkannt werden, wodurch ein vollständiger, umfassender Manipulationsschutz erzielt wird.

Erfindungsgemäß ist nicht nur die Sensorstruktur in das flexible Flächenelement eingearbeitet. Auch eine Auswerteeinheit, die in Form eines Mikroprozessors oder dergleichen ausgebildet sein kann, ist auf dem flexiblen Flächenelement angeordnet. Mit dieser erfolgt auf dem flexiblen Flächenelement selbst eine Auswertung von Sensorsignalen. In Abhängigkeit dieser Auswertung generiert die Auswerteeinheit Signale, die insbesondere angeben, ob ein Defekt in der Sensorstruktur vorliegt oder nicht, das heißt mit den Signalen wird angezeigt, ob eine Unterbrechung der Sensorstruktur vorliegt oder nicht. Insbesondere wird in der Auswerteeinheit ein Alarmsignal generiert, wenn ein Durchstoßen der Sensorstruktur detektiert wird.

Ein wesentlicher Aspekt der Erfindung besteht darin, dass auf dem flexiblen Flächenelement weiterhin ein Funksender und eine autarke Energieversorgung vorgesehen sind.

Der Grundgedanke der Erfindung besteht darin, dass die Signale der Auswerteeinheit mittels des Funksenders an einen Funkempfänger einer externen Einheit gesendet werden. Da mit dem Funksender und dem Funkempfänger eine berührungslose Funkübertragungsstrecke gebildet wird, über welche auch über große Entfernungen Daten gesendet werden können, kann der Ort der externen Einheit völlig unabhängig vom Installationsort des flexiblen Flächenelements gewählt werden, wodurch eine hohe Bedienerfreundlichkeit erzielt wird.

Mit dem flexiblen Flächenelement kann damit an einem Installationsort eine Umhüllung von Objekten erfolgen, wodurch diese Objekte gegen unbefugte Eingriffe geschützt sind. Die Objekte können dabei unterschiedliche Formen und Geometrien aufweisen, da die Größe des flexiblen Flächenelements flexibel an die jeweilige Applikation angepasst werden kann.

Ein weiterer wesentlicher Aspekt der Erfindung besteht darin, dass das flexible Flächenelement mit der Sensorstruktur und den dieser zugeordneten Komponenten, nämlich der Auswerteeinheit und dem Funksender, eine einfache, wartungsfreie Einheit ausbildet. Dies wird erfindungsgemäß dadurch erreicht, dass der Sensorstruktur, der Auswerteeinheit und dem Funksender auf dem flexiblen Flächenelement eine autarke Energieversorgung zugeordnet ist, welche vorteilhaft von einer Batterie gebildet ist. Mit der autarken Energieversorgung wird über einen großen Zeitraum eine zuverlässige Spannungsversorgung für die elektrischen Komponenten auf dem flexiblen Flächenelement bereitgestellt, so dass diese entsprechend wartungsfrei und unabhängig von stationären Spannungsversorgungen betrieben werden können. Besonders vorteilhaft stellt die autarke Energieversorgung eine Spannungsversorgung für die gesamte zu erwartende Lebensdauer der elektronischen Komponenten und auch des flexiblen Flächenelements zur Verfügung.

Die autarke Energieversorgung weist wie auch die Auswerteeinheit eine sehr kleine Bauform auf, so dass diese Einheiten platzsparend auf dem flexiblen Flächenelement angeordnet werden können, wobei die Fixierung beispielsweise durch Schweiß- oder Klebeverbindungen erfolgt.

Besonders vorteilhaft ist das flexible Flächenelement ein textiles Flächenelement.

Insbesondere kann das textile Flächenelement ein Gestrick, ein Gewirke, ein Gewebe, eine Stickerei oder ein Vlies sein. Prinzipiell kann das flexible Flächenelement von einer Folie, insbesondere auch von einer beschichteten Folie gebildet sein.

Generell kann das flexible Flächenelement auch nur teilweise aus textilen Materialien bestehen. Beispielsweise können textile Flächenelemente mit Folien oder dergleichen Verbundstrukturen bilden.

Durch eine geeignete Wahl der Materialbeschaffenheit der Fäden, aus welchen das textile Flächenelement besteht, kann eine Anpassung an die jeweilige Applikation erfolgen. Insbesondere kann so das textile Flächenelement für einen Outdoor-Einsatz ausgebildet sein.

Gemäß einer vorteilhaften Ausführungsform ist die Sensorstruktur von elektrisch leitfähigen Fäden gebildet, welche in das Flächenelement eingearbeitet sind.

Vorteilhaft bestehen die elektrisch leitfähigen Fäden aus einem metallischen Werkstoff.

Generell können die elektrisch leitfähigen Fäden auch aus nicht metallischen Werkstoffen bestehen.

Die elektrisch leitfähigen Fäden können vorteilhaft mit geeigneten Textilmaschinen wie zum Beispiel Kettenwirkmaschinen in das textile Flächenelement eingearbeitet werden, das heißt die elektrisch leitfähigen Fäden können in automatisierten Prozessen rationell im textilen Flächenelement eingearbeitet werden.

Besonders vorteilhaft bilden die elektrisch leitfähigen Fäden eine Gitterstruktur aus, welche sich über das gesamte Flächenelement erstreckt. Eine Gitterstruktur im Sinne der vorliegenden Anmeldung ist dabei derart ausgebildet, dass sich ein durchgehender elektrisch leitfähiger Faden schlaufenförmig über die gesamte Fläche des Flächenelements erstreckt.

Die Detektion eines Eingriffs in das flexible Flächenelement kann durch eine Widerstandsänderung, die durch ein lokales Unterbrechen der Gitterstruktur der elektrisch leitfähigen Fäden oder allgemein in die Sensorstruktur bewirkt wird. Die Auswerteeinheit weist hierzu Mittel auf, diese Widerstandsänderung als Sensorsignal der Sensorstruktur zu erfassen. Beispielsweise kann die Gitterstruktur der elektrisch leitfähigen Fäden oder allgemein die Sensorstruktur an ein Messnetzwerk, insbesondere an Messwiderstände angeschlossen werden, deren Widerstandsänderung in die Auswerteeinheit, beispielsweise in Form eines Spannungssignals, eingelesen wird.

Besonders vorteilhaft bestehen die elektrisch leitfähigen Fäden aus niederohmigen Werkstoffen. Derartige elektrisch leitfähige Fäden generieren Niederspannungssignale, die in der Auswerteeinheit unmittelbar ausgewertet werden können, so dass keine zusätzlichen Schaltungen zur Umsetzung der in den elektrisch leitfähigen Fäden generierten Signale mehr notwendig sind. Besonders vorteilhaft generieren die elektrisch leitfähigen Fäden binäre Niederspannungssignale in Abhängigkeit davon, ob eine Unterbrechung der elektrisch leitfähigen Fäden vorliegt oder nicht.

Abhängig von diesen Sensorsignalen generiert die Auswerteeinheit Signale, die über den Funksender ausgesendet und in der externen Einheit zugeführt werden. Insbesondere generiert die Auswerteeinheit ein Alarmsignal, wenn mit der Sensorstruktur ein Eingriff in die Sensorstruktur detektiert wird.

Besonders vorteilhaft ist im Gehäuse der Auswerteeinheit eine Sicherung oder ein sonstiges Sensorelement vorgesehen, welche beziehungsweise welches bei einem unerlaubten Öffnen des Gehäuses anspricht. Bei einem solchen Ansprechen generiert die Auswerteeinheit ein Manipulations-Alarmsignal.

Weiterhin kann die Auswerteeinheit auch Signale generieren, die Statusmeldungen beinhalten, die an die externe Einheit ausgegeben werden, wodurch die Funktionsfähigkeit der Sensorstruktur und der Auswerteeinheit überprüft werden kann.

Besonders vorteilhaft sind der Funksender und der Funkempfänger Bestandteil einer bidirektionalen Funkübertragungsstrecke.

Dies kann dadurch realisiert werden, indem sowohl auf dem flexiblen Flächenelement als auch in oder an der externen Einheit jeweils ein Funksender und Funkempfänger vorgesehen sind. In diesem Fall können auch an der externen Einheit Signale in die Auswerteeinheit eingelesen werden, beispielsweise um eine Parametrierung durchzuführen.

Gemäß einer besonders vorteilhaften Ausgestaltung bilden der Funksender und der Funkempfänger eine Funkübertragungsstrecke, bei welcher Funksignale im MHz-Bereich übertragen werden.

Geeignete Frequenzen, auf welche Signale übertragen werden können, liegen im Bereich von 800 MHz.

Gemäß einer alternativen Ausgestaltung bilden der Funksender und der Funkempfänger eine Bluetooth-Funkübertragungsstrecke aus. In diesem Fall werden Signale in anderen Frequenzbereichen.

Gemäß einer vorteilhaften Ausführungsform bildet die externe Einheit eine Meldeeinheit aus.

Die Meldeeinheit kann eine mobile Einheit sein. Weiterhin kann die Meldeeinheit eine stationäre Einheit bilden, die relativ zum flexiblen Flächenelement in einer vorgegebenen Distanz platziert wird, die innerhalb der Reichweite der vom Funksender und Funkempfänger gebildeten Funkübertragungsstrecke liegt.

Die Meldeeinheit weist generell optische oder akustische Signalgeber auf, die ein Alarmsignal anzeigen, wenn ein Eingriff in das flexible Flächenelement gegeben ist. Weiterhin kann die Meldeeinheit auch ein I/0 Modul, beispielsweise mit einem Bildschirm und einer Tastatur zur Ein- und Ausgabe von Daten aufweisen.

Prinzipiell ist es auch möglich, die Meldeeinheit über das Internet an weitere Stationen anzukoppeln, so dass von diesen Stationen an beliebigen Standorten eine Manipulationskontrolle des flexiblen Flächenelements möglich ist.

Gemäß einer alternativen Ausgestaltung ist die externe Einheit ein Smartphone.

Zur Ankopplung an dieses Smartphone weist dann der Funkempfänger bevorzugt eine SIM-Karte oder ein Sigfox-Modul auf.

In der Auswerteeinheit generierte Signale, insbesondere Alarmsignale oder Manipulations-Alarmsignale, können dann als Nachrichten auf dem Smartphone angezeigt werden.

Das erfindungsgemäße flexible Flächenelement kann für unterschiedliche Applikationen eingesetzt werden.

Beispielsweise können mit derartigen flexiblen Flächenelementen Koffer, Taschen, Rucksäcke oder dergleichen hergestellt werden. Die dort gelagerten Objekte sind durch die Sensorstruktur effizient gegen Manipulationen wie Diebstahl, Vandalismus und dergleichen gesichert.

Gemäß einer besonders vorteilhaften Anwendung bildet das flexible Flächenelement eine Plane aus. Beispielsweise ist die Plane an einer Ladefläche eines Fahrzeugs oder eines Anhängers eines Fahrzeugs angebracht.

In diesem Fall kann beispielsweise in der Fahrerkabine eine Meldeeinheit mit dem Funkempfänger integriert sein. So kann der Fahrer des Fahrzeugs einfach und schnell Manipulationsversuche an der Plane feststellen.

Die Erfindung wird im Folgenden anhand der Zeichnungen erläutert. Es zeigen:
- Figur 1:: Ausführungsbeispiel des erfindungsgemäßen flexiblen Flächenelements mit einer zugeordneten Meldeeinheit.
- Figur 2:: Applikationsbeispiel für die Anordnung gemäß Figur 1.

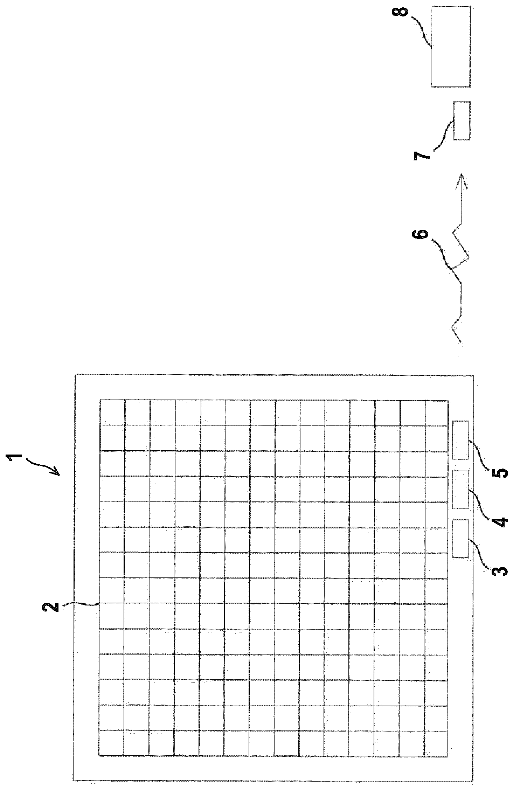

Figur 1 zeigt schematisch ein Ausführungsbeispiel des erfindungsgemäßen flexiblen Flächenelements 1.

Das flexible Flächenelement 1 ist im vorliegenden Fall von einem textilen Flächenelement gebildet. Das textile Flächenelement kann zum Beispiel ein Gewebe, Gestrick, Gewirke, eine Stickerei oder ein Vlies sein. Weiterhin kann das flexible Flächenelement aus einer Folie gebildet sein.

Erfindungsgemäß ist in das flexible Flächenelement 1 eine Sensorstruktur eingearbeitet, die eine elektrisch leitfähige Struktur ausbildet. Die Sensorstruktur dient allgemein zur Detektion von mechanischen Eingriffen in das flexible Flächenelement 1, insbesondere in Form von Einstichen in das flexible Flächenelement 1. Diese Eingriffe ändern generell die elektrischen Eigenschaften der Sensorstruktur. Diese Änderungen definieren eine Detektionsgröße anhand derer der Eingriff detektiert werden kann.

Im vorliegenden Fall besteht die Sensorstruktur aus einer Gitterstruktur aus elektrisch leitfähigen Fäden 2, die aus metallischen und/oder nicht metallischen Werkstoffen bestehen können. Im vorliegenden Fall ist eine periodische Gitterstruktur vorgesehen, die sich im Wesentlichen über die gesamte Fläche des flexiblen Flächenelements 1 erstreckt. Der Begriff Gitterstruktur im Sinne der vorliegenden Erfindung ist so zu verstehen, dass der oder die elektrisch leitfähigen Fäden eine durchgehende vorzugsweise schlaufenförmige Struktur ausbilden, die sich über das gesamte flexible Flächenelement erstreckt.

Dies führt zu einer Widerstandsänderung der Gitterstruktur, die beispielsweise in einem Messnetzwerk erfasst wird.

Diese Widerstandsänderung wird in ein Spannungssignal umgesetzt, das einer Auswerteeinheit 3 zugeführt ist, die von einem Mikroprozessor oder dergleichen gebildet sein kann.

Besonders vorteilhaft bestehen die elektrisch leitfähigen Fäden aus niederohmigen Materialien. Dann generieren die elektrisch leitfähigen Fäden Niederspannungssignale, die der Auswerteeinheit direkt zugeführt werden können.

In der Auswerteeinheit 3 wird aus den so gebildeten Sensorsignalen ein Signal generiert, dessen Signalzustände insbesondere angeben, ob ein Eingriff im flexiblen Flächenelement 1 vorliegt oder nicht. Insbesondere wird in der Auswerteeinheit 3 ein Alarmsignal generiert, wenn ein Eingriff im flexiblen Flächenelement 1 vorliegt. Die Auswerteeinheit 3 ist durch eine Schweiß- oder Klebeverbindung auf dem flexiblen Flächenelement 1 fixiert.

Die Auswerteeinheit kann eine Sicherung oder dergleichen als Manipulationsschutz aufweisen. Wird das Gehäuse der Auswerteeinheit unbefugt geöffnet, spricht die Sicherung an und die Auswerteeinheit generiert ein Manipulations-Alarmsignal.

Erfindungsgemäß sind auf dem flexiblen Flächenelement 1 weiterhin eine autarke Energieversorgung in Form einer Batterie 4 und ein Funksender 5 angeordnet, wobei auch diese Einheiten mittels Klebe- oder Schweißverbindungen auf dem flexiblen Flächenelement 1 fixiert sind.

Die Auswerteeinheit 3 und der Funksender 5 sind untereinander verbunden und werden an die Batterie 4 angeschlossen. Mit der Batterie 4 erfolgt eine Spannungsversorgung dieser Einheiten.

In der Auswerteeinheit 3 generierte Signale werden über den Funksender 5 als Funksignale 6 an einen Funkempfänger 7 übertragen, der einer externen Einheit zugeordnet ist. Insbesondere kann der Funkempfänger 7 in der externen Einheit integriert sein.

Im vorliegenden Fall ist die externe Einheit von einer Meldeeinheit 8 gebildet. Die Meldeeinheit 8 weist optische und/oder akustische Signalgeber auf. Mit diesen Signalgebern kann ein Alarmsignal, das von der Auswerteeinheit 3 gemeldet wird, angezeigt werden. Weiterhin kann die Meldeeinheit 8 zum Beispiel über eine Internetverbindung mit weiteren externen Einheiten verbunden sein, denen die Signale, insbesondere Alarmsignale der Auswerteeinheit 3 des flexiblen Flächenelements 1, zugeführt werden.

Die externe Einheit kann generell auch von einem Smartphone gebildet sein. In diesem Fall weist der zugeordnete Funkempfänger 7 eine SIM-Karte oder ein Sigfox-Modul zur Ankopplung an das Smartphone auf. Auch die externe Einheit kann eine einfache Energieversorgung aufweisen. Zudem kann die externe Einheit wie die Auswerteeinheit einen Manipulationsschutz aufweisen.

Im vorliegenden Fall bilden der Funksender 5 des flexiblen Flächenelements 1 und der Funkempfänger 7 der externen Einheit eine unidirektionale Funkübertragungsstrecke. Prinzipiell ist auch eine bidirektionale Funkübertragungsstrecke möglich. Dann weisen sowohl das flexible Flächenelement 1 als auch die externe Einheit einen Funksender 5 und einen Funkempfänger 7 auf.

Im vorliegenden Fall werden über die Funkübertragungsstrecke Funksignale 6 im MHz-Bereich übertragen, besonders vorteilhaft bei einer Frequenz von 868 MHz. Alternativ können Bluetooth-Funkübertragungsstrecken eingesetzt werden.

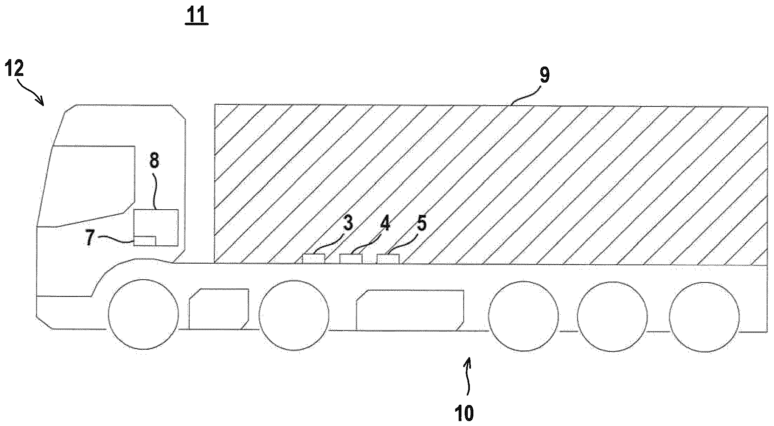

Figur 2 zeigt ein Applikationsbeispiel der Anordnung gemäß Figur 1. In diesem Fall ist die Plane 9 auf einem Anhänger 10 eines Lastkraftwagens 11 von dem erfindungsmäßigen flexiblen Flächenelement 1 gebildet. In dem Fahrerhaus 12 des Lastkraftwagens 11 befindet sich die Meldeeinheit 8 mit dem Funkempfänger 7, der die Signale des Funksenders 5 auf dem flexiblen Flächenelement 1 empfängt. Die Meldeeinheit 8 kann auch im Bereich des Anhängers 10 angeordnet sein.

Generell ist die Erfindung für Fahrzeuge aller Art anwendbar, insbesondere auch für schienengebundene Fahrzeuge.

### Bezugszeichenliste

- (1): Flexibles Flächenelement
- (2): Elektrisch leitfähiger Faden
- (3): Auswerteeinheit
- (4): Batterie
- (5): Funksender
- (6): Funksignal
- (7): Funkempfänger
- (8): Meldeeinheit
- (9): Plane
- (10): Anhänger
- (11): Lastkraftwagen
- (12): Fahrerhaus

## Patentansprüche

1. Flexibles Flächenelement (1) mit einer Sensorstruktur und einer zugeordneten Auswerteeinheit (3), welche ausgebildet sind, Einschnitte in dem flexiblen Flächenelement (1) zu detektieren, **dadurch gekennzeichnet, dass** auf dem flexiblen Flächenelement (1) die Auswerteeinheit (3) sowie eine autarke Energieversorgung (4) und ein Funksender (5) mittels Klebe- oder Schweißverbindungen fixiert sind, wobei die autarke Energieversorgung und der Funksender (5) an die Auswerteeinheit (3) angeschlossen sind, wobei in der Auswerteeinheit (3) generierte Signale mittels des Funksenders (5) an einen Funkempfänger (7) einer externen Einheit übertragbar sind.

2. Flexibles Flächenelement (1) nach Anspruch 1, **dadurch gekennzeichnet, dass** dieses ein textiles Flächenelement ist.

3. Flexibles Flächenelement (1) nach Anspruch 2, **dadurch gekennzeichnet, dass** das textile Flächenelement ein Gestrick, ein Gewirke, eine Stickerei, ein Gewebe oder ein Vlies ist.

4. Flexibles Flächenelement (1) nach Anspruch 1 - 3, **dadurch gekennzeichnet, dass** die Sensorstruktur von elektrisch leitfähigen Fäden (2) gebildet ist, welche in das Flächenelement eingearbeitet sind, wobei insbesondere die elektrisch leitfähigen Fäden (2) aus einem metallischen Werkstoff bestehen, und insbesondere die elektrisch leitfähigen Fäden (2) eine Gitterstruktur ausbilden, welche sich über das gesamte Flächenelement erstreckt.

5. Flexibles Flächenelement (1) nach Anspruch 4, **dadurch gekennzeichnet, dass** die elektrisch leitfähigen Fäden (2) aus niederohmigen Werkstoffen bestehen, und/oder dass die elektrisch leitfähigen Fäden (2) abhängig davon, ob diese unterbrochen sind oder nicht, Niederspannungssignale generieren, die in der Auswerteeinheit (3) unmittelbar ausgewertet werden können.

6. Flexibles Flächenelement (1) nach einem der Ansprüche 1 - 5, **dadurch gekennzeichnet, dass** die Auswerteeinheit (3) ein Alarmsignal generiert, wenn mit der Sensorstruktur ein Eingriff in die Sensorstruktur detektiert wird.

7. Flexibles Flächenelement (1) nach einem der Ansprüche 1 - 6, **dadurch gekennzeichnet, dass** die Auswerteeinheit (3) einen Manipulationsschutz aufweist.

8. Flexibles Flächenelement (1) nach einem der Ansprüche 1 - 7, **dadurch gekennzeichnet, dass** die autarke Energieversorgung eine Batterie (4) ist.

9. Flexibles Flächenelement (1) nach einem der Ansprüche 1 - 8, **dadurch gekennzeichnet, dass** der Funksender (5) und der Funkempfänger (7) eine Funkübertragungsstrecke bilden, bei welcher Funksignale (6) im MHz-Bereich übertragen werden.

10. Flexibles Flächenelement (1) nach einem der Ansprüche 1 - 9, **dadurch gekennzeichnet, dass** der Funksender (5) und der Funkempfänger (7) eine Bluetooth-Funkübertragungsstrecke ausbilden, und/oder dass der Funksender (5) und der Funkempfänger (7) Bestandteil einer bidirektionalen Funkübertragungsstrecke sind.

11. Flexibles Flächenelement (1) nach einem der Ansprüche 1 - 10, **dadurch gekennzeichnet, dass** die externe Einheit eine Meldeeinheit (8) ausbildet, oder ein Smartphone ist.

12. Flexibles Flächenelement (1) nach Anspruch 11, **dadurch gekennzeichnet, dass** zur Verbindung mit dem Smartphone der Funkempfänger (7) eine SIM-Karte oder ein Sigfox-Modul aufweist.

13. Flexibles Flächenelement (1) nach einem der Ansprüche 1 - 12, **dadurch gekennzeichnet, dass** dieses eine Plane (9) ausbildet.

14. Flexibles Flächenelement (1) nach Anspruch 13, **dadurch gekennzeichnet, dass** die Plane (9) an einer Ladefläche eines Fahrzeugs oder eines Anhängers (10) eines Fahrzeugs angebracht ist.

15. Flexibles Flächenelement (1) nach Anspruch 14, **dadurch gekennzeichnet, dass** der dem an der Plane (9) angeordneten Funksender (5) zugeordnete Funkempfänger (7) am Fahrzeug oder am Anhänger (10) angeordnet ist.

## Claims

1. A flexible area element (1) with integrated sensing wires and an associated evaluation unit (3), which are designed to detect incisions in the flexible area element (1), **characterised in that** the evaluation unit (3) as well as a self-sufficient energy supply (4) and a radio transmitter (5) are fixed to the flexible area element (1) by means of adhesive or welded connections, wherein the self-sufficient energy supply and the radio transmitter (5) are connected to the evaluation unit (3), wherein signals generated in the evaluation unit (3) can be transmitted to a radio receiver (7) of an external unit by means of the radio transmitter (5).

2. A flexible area element (1) according to claim 1, **characterised in that** this is a textile sheet element.

3. A flexible area element (1) according to claim 2, **characterised in that** the textile flat element is a knitted fabric, a knitted fabric, an embroidery, a woven fabric or a non-woven fabric.

4. A flexible area element (1) according to claim 1 to 3, **characterised in that** the sensor structure is formed by electrically conductive threads (2) which are incorporated into the flat element, in particular the electrically conductive threads (2) being made of a metallic material, and in particular the electrically conductive threads (2) forming a grid structure which extends over the entire flat element.

5. A flexible area element (1) according to claim 4, **characterised in that** the electrically conductive threads (2) consist of low-resistance materials and/or **in that** the electrically conductive threads (2) generate low-voltage signals which can be evaluated directly in the evaluation unit (3), depending on whether they are interrupted or not.

6. A flexible area element (1) according to one of claims 1 to 5, **characterised in that** the evaluation unit (3) generates an alarm signal when the sensor structure detects an interference with the sensor structure.

7. A flexible area element (1) according to one of claims 1 to 6, **characterised in that** the evaluation unit (3) has tamper protection.

8. A flexible area element (1) according to one of claims 1 to 7, **characterised in that** the self-sufficient energy supply is a battery (4).

9. A flexible area element (1) according to one of claims 1 to 8, **characterised in that** the radio transmitter (5) and the radio receiver (7) form a radio transmission path in which radio signals (6) are transmitted in the MHz range.

10. A flexible area element (1) according to one of claims 1 to 9, **characterised in that** the radio transmitter (5) and the radio receiver (7) form a Bluetooth radio transmission path, and/or **in that** the radio transmitter (5) and the radio receiver (7) are part of a bidirectional radio transmission path.

11. A flexible area element (1) according to one of claims 1 to 10, **characterised in that** the external unit forms a signalling unit (8) or is a smartphone.

12. A flexible area element (1) according to claim 11, **characterised in that** the radio receiver (7) has a SIM card or a Sigfox module for connection to the smartphone.

13. A flexible area element (1) according to one of claims 1 to 12, **characterised in that** this forms a tarpaulin (9).

14. A flexible area element (1) according to claim 13, **characterised in that** the tarpaulin (9) is attached to a loading surface of a vehicle or a trailer (10) of a vehicle.

15. A flexible area element (1) according to claim 14, **characterised in that** the radio receiver (7) assigned to the radio transmitter (5) arranged on the tarpaulin (9) is arranged on the vehicle or on the trailer (10).

## Revendications

1. Elément plan flexible (1) avec des capteurs en forme de fils conducteurs et une unité d'évaluation associée (3), qui sont conçus pour détecter les incisions dans l'élément plan flexible (1), **caractérisé en ce que** l'unité d'évaluation (3) ainsi qu'une alimentation en énergie autosuffisante (4) et un émetteur radio (5) sont fixés à l'élément plan flexible (1) au moyen de connexions adhésives ou soudées, l'alimentation en énergie autonome et l'émetteur radio (5) sont reliés à l'unité d'évaluation (3), les signaux générés dans l'unité d'évaluation (3) pouvant être transmis à un récepteur radio (7) d'une unité externe au moyen de l'émetteur radio (5).

2. Elément plan flexible (1) selon la revendication 1, **caractérisé en ce qu'**il s'agit d'un élément de feuille textile.

3. Elément plan flexible (1) selon la revendication 2, **caractérisé en ce que** l'élément plat textile est un tissu à mailles, un tricot, une broderie, un tissu tissé ou un tissu non tissé.

4. Elément plan flexible (1) selon les revendications 1 à 3, **caractérisé en ce que** la structure du capteur est formée par des fils conducteurs d'électricité (2) qui sont incorporés dans l'élément plat, en particulier les fils conducteurs d'électricité (2) étant faits d'un matériau métallique, et en particulier les fils conducteurs d'électricité (2) formant une structure de grille qui s'étend sur l'ensemble de l'élément plat.

5. Elément plan flexible (1) selon la revendication 4, **caractérisé en ce que** les fils conducteurs d'électricité (2) sont constitués de matériaux à faible résistance et/ou **en ce que** les fils conducteurs d'électricité (2) génèrent des signaux à basse tension qui peuvent être évalués directement dans l'unité d'évaluation (3), selon qu'ils sont interrompus ou non.

6. Elément plan flexible (1) selon l'une des revendications 1 à 5, **caractérisé en ce que** l'unité d'évaluation (3) génère un signal d'alarme lorsque la structure du capteur détecte une interférence avec la structure du capteur.

7. Elément plan flexible (1) selon l'une des revendications 1 à 6, **caractérisé en ce que** l'unité d'évaluation (3) est dotée d'une protection contre l'effraction.

8. Elément plan flexible (1) selon l'une des revendications 1 à 7, **caractérisé en ce que** la source d'énergie autosuffisante est une batterie (4).

9. Elément plan flexible (1) selon l'une des revendications 1 à 8, **caractérisé en ce que** l'émetteur radio (5) et le récepteur radio (7) forment une voie de transmission radio dans laquelle des signaux radio (6) sont transmis dans la gamme des MHz.

10. Elément plan flexible (1) selon l'une des revendications 1 à 9, **caractérisé en ce que** l'émetteur radio (5) et le récepteur radio (7) forment une voie de transmission radio Bluetooth, et/ou **en ce que** l'émetteur radio (5) et le récepteur radio (7) font partie d'une voie de transmission radio bidirectionnelle.

11. Elément plan flexible (1) selon l'une des revendications 1 à 10, **caractérisé en ce que** l'unité externe forme une unité de signalisation (8) ou est un smartphone.

12. Elément plan flexible (1) selon la revendication 11, **caractérisé en ce que** le récepteur radio (7) possède une carte SIM ou un module Sigfox pour la connexion au smartphone.

13. Elément plan flexible (1) selon l'une des revendications 1 à 12, **caractérisé en ce qu'**il forme une bâche (9).

14. Elément plan flexible (1) selon la revendication 13, **caractérisé en ce que** la bâche (9) est fixée à une surface de chargement d'un véhicule ou d'une remorque (10) d'un véhicule.

15. Elément plan flexible (1) selon la revendication 14, **caractérisé en ce que** le récepteur radio (7) affecté à l'émetteur radio (5) disposé sur la bâche (9) est disposé sur le véhicule ou sur la remorque (10).
